# EUROPÄISCHE PATENTSCHRIFT

(11) **EP 1 107 866 B1**
(45) Veröffentlichungstag und Bekanntmachung des Hinweises auf die Patenterteilung: **25.02.2004**
(21) Anmeldenummer: 99943161.2
(22) Anmeldetag: 27.08.1999
(51) Int. Cl.: B32B 31/20, B42D 15/10

(54) **VERFAHREN UND VORRICHTUNG ZUR HERSTELLUNG KARTENFÖRMIGER INFORMATIONSTRÄGER**
METHOD AND DEVICE FOR PRODUCING CARD-LIKE INFORMATION CARRIERS
PROCEDE ET DISPOSITIF DE PRODUCTION DE SUPPORTS D'INFORMATIONS EN FORME DE CARTES

(30) Priorität: 29.08.1998 DE 19839517
(43) Veröffentlichungstag der Anmeldung: 20.06.2001
(73) Patentinhaber: INTERLOCK AG, 8954 Geroldswil (CH)
(72) Erfinder: Vogt, Werner, 5453 Remetschwil (CH)
(74) Vertreter: Jakelski, Joachim, Dr.
(86) Internationale Anmeldenummer: PCT/IB1999/001560
(87) Internationale Veröffentlichungsnummer: WO 2000/012308

(56) Entgegenhaltungen:
- DE-A- 4 118 814
- DE-U- 9 218 985
- US-A- 4 659 304
- US-A- 5 468 315
- DATABASE WPI Section Ch, Week 198416 Derwent Publications Ltd., London, GB; Class A32, AN 1984-097690 XP002128554 & JP 59 042954 A (MATSUSHITA ELECTRIC WORKS LTD), 9. März 1984 (1984-03-09)

## Beschreibung

### Stand der Technik

Es sind zwei Arten von Laminatoren bekannt, die zur Herstellung von aus Schichten (Laminat) bestehenden Kunststoffkarten durch Kaschieren, also Verschweißen der Schichten, geeignet sind.

Eine erste Gruppe arbeitet mit Übermaß der zwischen zwei Heizplatten eingebrachten Laminatschichten, die durch üblicherweise gleichzeitige Wärme- und Druckeinwirkung kaschiert werden. Das fertige Laminat muß wegen seiner verfließenden Ränder anschließend in einem zweiten Bearbeitungsschritt nach Abkühlung auf Kartenendmaß noch zugeschnitten, nämlich gestanzt werden.

Eine zweite Gruppe zum Kaschieren bzw. Heißversiegeln von geeigneten Kunststoffkarten umfaßt eine das zu kaschierende Laminat aufnehmende sofort Kartenendmaß aufweisende Hohlform oder Kavität und oberhalb und unterhalb der Kavität angeordnete Heizplatten, denen dann, wie bekannt, wiederum Kühlkörper zugeordnet sind, sowie Druckmittel, die die Heizplatten so aufeinander pressen, daß ein zwischen diesen aufgenommenes Laminat für den kurzen Einwirkungszeitraum unter entsprechend bemessene Druckund Temperatureinwirkung gelangt.

Es ergibt sich so unmittelbar eine fertige Karte, wobei stets bis kurz vor oder an den Erweichungspunkt des eingebrachten Materials heranreichend kaschiert wird, das als einstückige fertige Karte der Kavität entnommen werden kann.

Solche Laminatoren der zweiten Gruppe, wie sie z.B. aus den Schriften DE 39 16 708 A1, DE 42 06 342 A1 oder EP 0 669 214 A1 hervorgehen, verfügen über einen umlaufenden Rahmen, der die Aufnahmekavität begrenzt und dessen Innenabmessungen dem Kartenendmaß entsprechen, so daß auf diese Weise der spätere Bearbeitungsstanzschritt entfällt. Solche, eine fertige, Endmaß aufweisende Karte herstellende Laminatoren, die im folgenden auch als Endmaß-Laminatoren bezeichnet werden, verfügen zumeist auch über einen Druckausgleichskörper, um eine gleichmäßige Oberflächenstruktur der fertigen Karte und insbesondere auch eine gleichmäßige Druckeinwirkung während des Kaschiervorgangs sicherzustellen.

Ein solcher Laminator geht beispielsweise auch aus DE 92 18 985 U1 hervor.

Problematisch bei solchen Endmaß-Laminatoren kann allerdings der Umstand sein, daß die eingelegten Laminatschichten randseitig beim Kaschiervorgang - notwendigerweise - an die Endmaß aufweisenden Formteile zur Anlage gelangen und in diesen Bereichen unausweichlich daher auch ein Wärmeverlust auftritt, so daß zwar von einer gleichmäßigen Druckeinwirkung gesprochen werden kann, es jedoch nicht gelingt, bei dieser Art der Heißsiegelung, also Kaschierung, auch eine gleichmäßige Wärmeeinwirkung in allen Bereichen des eingelegten zu kaschierenden Materials zu gewährleisten.

Der Grund hierfür liegt darin, daß allein schon die beidseitigen Heizplatten endliche Abmessungen aufweisen, so daß, rein physikalisch betrachtet, notwendigerweise schon bei diesen ein gewisser Temperaturgradient von der Mitte zu den Randbereichen auftritt. Diesem Problem könnte allerdings durch eine entsprechend geeignete Verteilung der Heizmittel begegnet werden - was sich auf diese Weise jedoch nicht beheben läßt, ist, insbesondere wenn man die Kürze der Kaschierungszeit mit einbezieht, während welcher die Druck- und Temperatureinwirkung auf das eingelegte Laminat aufrecht erhalten wird, der Umstand, daß die an die seitlichen, Endmaß aufweisenden Formteile herangedrückten oder an diese zur Anlage kommenden Randbereiche des eingelegten, zu kaschierenden Materials dort Wärme verlieren, so daß die für einen gleichmäßigen Kaschierungsvorgang über die ganze Fläche des Laminats erforderliche gleichmäßige Verteilung der einwirkenden Wärmemengen nicht sichergestellt werden kann.

Das bedeutet, daß die Kaschierung gerade im Kartenrandbereich möglicherweise oder auch mit einiger Wahrscheinlichkeit nicht vollständig erfolgt ist, so daß die miteinander zu verschweißenden Schichten von dort aus, etwa zu Fälschungszwecken, wieder aufgebrochen werden können. Man kann diesem Umstand auch nicht dadurch begegnen, daß man einfach stärker insgesamt heizt, denn dies führt zu einer zu starken Erwärmung des Laminats im Mittenbereich, so daß es dort zu einem nicht erwünschten Verfließen der Materialien und evtl. schon vorhandener Informationen, Daten u.dgl. kommen könnte. Auch für eingelegte Elektronikteile wäre eine solche Maßnahme nicht zuträglich.

Der Erfindung liegt daher die Aufgabe zugrunde, hier Abhilfe zu schaffen und auch bei solchen, mit ihren Formteilen Endmaß aufweisenden Laminatoren für einen gleichmäßigen Kaschierungsvorgang unter Einschluß der Kartenrandbereiche Sorge zu tragen.

### Vorteile der Erfindung

Das erfindungsgemäße Verfahren löst diese Aufgabe mit den kennzeichnenden Merkmalen des Anspruchs 1; die Aufgabe wird ferner gelöst mit den kennzeichnenden Merkmalen des Anspruchs 2. Durch die Vermeidung des Abflusses von Wärmeenergie in den Randbereichen der Kavität des Laminators beziehungsweise, was damit gleichbedeutend ist, der Aufrechterhaltung und sozusagen Rückkonzentrierung der Wärme durch die Form auf die eingelegte zu kaschierende Karte bzw. das Laminat wird sichergestellt, daß diese auch in den Randbereichen zur gleichen Zeit wie im mittleren Bereich die für den Kaschierungsvorgang erforderliche, genaue Erweichungstemperatur erreicht. Dadurch ergibt sich nicht nur ein formschönes Aussehen des gesamten Fertigprodukts über seine ganze Oberfläche, sondern auch die Sicherheit, daß gerade im Randbereich die miteinander zu kaschierenden Schichten des Laminats auch einwandfrei miteinander verbunden sind bzw. daß bei einer eingelegten Einzelschicht deren Randbereich den gleichen Kaschierungsgrad erreicht wie der Mittenbereich.

Erzielen läßt sich ein solches Ergebnis dadurch, daß die Form einen umlaufenden, vorzugsweise auch ganz geschlossenen Rahmen aus einem geeigneten, schwer oder schlecht wärmeleitenden Material aufweist, wobei der Rahmen gleichzeitig mit seinen Innenabmessungen die Formkavität für das aufzunehmende Laminat bildet. Bestehen kann ein solcher Rahmen etwa aus einem schlecht oder sehr schlecht wärmeleitenden Kunststoff wie beispielsweise glasfaserverstärktem Epoxyharz; er kann aber auch einen geeigneten Sandwichaufbau aufweisen mit innen liegender, schwer wärmeleitender Beschichtung, oder er kann insgesamt etwa aus einem Material wie Keramik oder einem sonstigen Isolatormaterial bestehen.

Es gelingt dann durch entsprechende Auslegung von oberen und äußeren Heizplatten unter Einbeziehung der wärmeabweisenden Eigenschaften des Rahmens eines solchen Endmaß-Laminators, daß das eingelegte Laminat über seine gesamte Fläche und daher einschließlich seiner Randbereiche vollkommen gleichmäßig kaschiert wird.

### Zeichnung

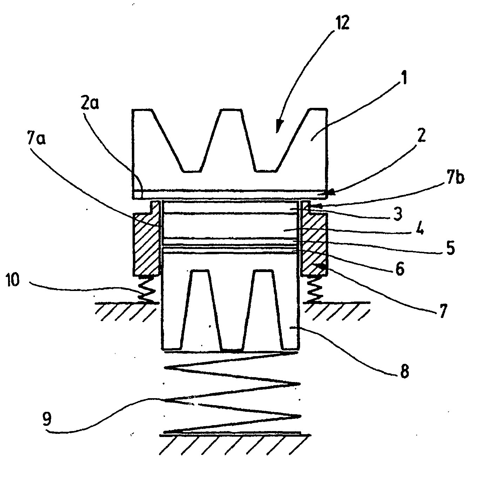

Die Zeichnung zeigt schematisiert im Querschnitt einen möglichen Aufbau eines Laminators mit eingelegten Kartenbestandteilen und wärmeisolierendem Formrahmen.

### Beschreibung der Ausführungsbeispiele

Der Grundgedanke vorliegender Erfindung besteht darin, die Kavität eines Endmaß-Laminators so auszubilden, daß während des Kaschiervorgangs, also beispielsweise dem Verschweißen mehrerer eingelegter Kartenlaminatschichten oder dem Kaschieren einer einzelnen dicken Kunststoffschicht auch die Randbereiche der insofern auf Endmaß gefertigten Karte die von Heizplatten zugeführte Wärmeenergie voll für den Kaschiervorgang nutzen können, d.h. also, daß ein Wärmeabfluß über die Randbereiche und die dort notwendigerweise vorhandenen, einer Anlage dienenden Formteile verhindert wird. Hierzu wird für einen die Kavität randseitig bildenden Rahmen vorzugsweise ein sehr schlecht wärmeleitendes Material vorgesehen, so daß die zugeführte Wärmemenge innerhalb der Kavität verbleibt und ein einwandfreier Kaschiervorgang des eingebrachten Materials (Laminats) an allen Stellen gewährleistet ist.

In der beigefügten Zeichnung ist der Endmaß-Laminator mit 12 bezeichnet; er umfaßt eine obere Heizplatte 2 und eine untere Heizplatte 6, die in Verbindung mit einem Rahmen 7 eine Kavität bilden, die der Aufnahme des zu kaschierenden Materials dient.

Bei diesem zu kaschierenden Material handelt es sich üblicherweise um schon fertiges Endmaß aufweisende Kartenschichten, bevorzugt PVC-Schichten für eine zu kaschierende Karte, die ein Laminat bilden und die daher als Stapel aus den Schichten 3, 4 und 5 in den Formhohlraum, also die Kavität des Laminators eingelegt werden.

Man erkennt ferner, daß zur Aufbringung des erforderlichen Drucks bei dem in der Zeichnung dargestellten Ausführungsbeispiel eines Laminators 12 die untere Heizplatte 6 mit möglichst hoher Genauigkeit den Innenabmessungen des Rahmens und damit auch dem Endmaß der herzustellenden Karte entspricht, so daß diese Heizplatte in die von dem Hohlraum des Rahmens 7 gebildete Kavität 7a, hier von unten, einfahren kann.

Da beide Heizplatten 2 und 6 zur Durchführung eines ordnungsgemäßen Kaschiervorgangs, nämlich anfänglich schnelle Zuführung der erforderlichen Wärmemengen unter Druck für den Kaschiervorgang und anschließend ebenso rasche Abführung der Wärme, damit das hergestellte Erzeugnis stabil aus dem Laminator entnommen werden kann, auf ihrer der Kavität abgewandten Seite Kühlkörper 1 und 8 tragen, weist auch der hier untere Kühlkörper 8 in etwa Kartenabmessungen auf, um ebenfalls in die Kavität einfahren zu können.

Bei dem dargestellten Ausführungsbeispiel wird der für den Kaschiervorgang erforderliche Druck in Verbindung mit der Wärmezuführung über die untere Heizplatte 6 aufgebracht, so daß entsprechende druckerzeugende Mittel, die in der Zeichnung als eine Vorspannungsfeder 9 repräsentativ für alle anderen Möglichkeiten angedeutet ist, auf den unteren Kühlkörper 8 einwirken.

Der obere Kühlkörper 2 überlappt den Rahmen 7 vorzugsweise allseitig mit einer rundum vorspringenden Lippe 2a, so daß er sozusagen als Deckel auf dem Rahmen 7 aufliegt, wobei bei stationärer Positionierung der oberen Heizplatte 2 mit zugeordnetem Kühlkörper 1 der Rahmen 7 beweglich gelagert sein kann und unter eigenen Vorspannungsmitteln 10 mit entsprechendem Druck von unten gegen die obere Heizplatte 2 gepreßt wird. Durch diese feste Anlage und randseitige Überlappung der Rahmenstruktur durch die Kühlkörperlippe 2a ist sichergestellt, daß man jedenfalls auf der oberen Fläche der fertigen Karte auch optisch eine einwandfreie, ansprechende Kaschierung erzielt mit präziser Randkante der auf Endmaß hergestellten Karte; verständlicherweise ist dies für den unteren Randkanten-Eckbereich der Karte nicht in dieser Vollendung möglich, da der Kaschierdruck aufgebracht werden muß und hierzu die untere Heizplatte 6 zur Ermöglichung ihrer Relativbeweglichkeit zum Rahmen 7 doch einen, wenn auch nur sehr geringfügigen Abstand zu den Rahmeninnenmaßen haben muß.

Der Rahmen 7 selbst besteht aus einem gering bzw. sehr gering wärmeleitenden Material oder ist jedenfalls auf seiner Innenfläche, also an den Bereichen, die dem zu kaschierenden Laminat zugewandt sind, mit einer entsprechend schwer wärmeleitenden Beschichtung versehen. Das aus den drei Schichten 3, 4 und 5 bestehende eingelegte Laminat der Karte ist zum besseren Verständnis in der zeichnerischen Darstellung übertrieben dick dargestellt; es kommt aber auf jeden Fall zum Fließen des Materials und Miteinanderverschmelzen, so daß der Formhohlraum oder die Kavität des Laminators von dem Kartenmaterial oder dem Laminat während des Kaschiervorgangs voll ausgefüllt wird.

Durch die schlecht wäremeleitenden, wärmeabweisenden, wärmereflektierenden bzw. die von den Heizkörpern auf das eingelegte Laminat übergegangene Wärmemenge auf das Laminat zurückkonzentrierenden Eigenschaften des Rahmens geht während des Kaschiervorgangs, der ja üblicherweise in Sekunden beendet ist, keine nennenswerte Wärmeenergie aus der Kavität bzw. von dem Laminatmaterial oder Kartenmaterial auf die innere Endmaß-Formwandung des Rahmens 7 über, so daß eine gleichmäßige Erhitzung und eine gleichmäßige Verschweißung, also Kaschierung sämtlicher Schichten der Karte bei Erzielung auch einer einwandfreien äußeren Erscheinungsform sichergestellt ist.

Wie in der Zeichnung dargestellt, kann der Rahmen 7 im Überlappungsbereich der oberen Heizplatte 2 einen umlaufenden Einschnitt oder eine äußere Ausnehmung 7b aufweisen, durch welche die Rahmenmasse dort, wo nach dem Zusammenpressen des eingelegten Laminats der Kaschiervorgang stattfindet, merklich geringer ist, so daß beispielsweise auch auf diese Weise die Wärmeaufnahme des Rahmens reduziert ist, zusätzlich zu seinen wärmeabweisenden, rückstrahlenden oder wärmedämmenden Eigenschaften.

Hauptgrund für diese Materialverdünnung ist aber die hierdurch erzielte Erhöhung des spezifischen Drucks zwischen der oberen Heizplatte und der oberen Rahmen-Randkante, die von unten an die Heizplatte anstößt, bei gegebenen Druckwerten durch die Vorspannungsmittel 10. Man erzielt so eine besonders gute Abdichtung der Kavität an dieser Stelle und einen sauberen, hochgenauen Formabschluß. Dies ist von Bedeutung für das in diesem Bereich erfolgende Verfließen des Laminatmaterials, so daß sich hier ein sauberer schnittgleicher Randkantenübergang für die fertige Kante ergibt. Es empfiehlt sich daher auch, den Kantenübergang ähnlich einem Flachkolbenring, fein zu schleifen.

Ferner kann es zweckmäßig sein für die Vorspannungsmittel 10 für den Rahmen eine Abstützung am unteren Kühlkörper zu wählen, denn je höher der Druck, der von den Heizplatten ausgeübt wird, umso höher muß auch der Rahmendruck (gegen die obere Heizplatte) sein, um ein Verfließen des Materials im Übergangsrandkantenbereich zu vermeiden.

## Patentansprüche

1. Verfahren zur Herstellung von kartenförmigen Informationsträgem, insbesondere Kreditkarten, Ausweiskarten, Identifikationskarten, Zugangskarten etc., wobei für den Kaschiervorgang mindestens eine auf Endmaß zu bringende Kartenform, vorzugsweise ein aus mehreren, Endmaß aufweisenden Kartenschichten bestehendes Laminat in eine Hohlform eingebracht und für eine vorgegebene Zeit einer gleichzeitigen Druck- und Wärmeeinwirkung unterworfen wird, **dadurch gekennzeichnet, daß** einerseits die Beheizung des in die Hohlform eingebrachten Materials auf mindestens einer GroBfläche wie für sich bekannt durch den Einsatz von Heizplatten erfolgt, und daß andererseits im umlaufenden schmalen äußeren Randbereich des eingebrachten Materials dort an sich abfließende Wärmemengen durch einen umlaufenden, aus einem gering oder gar nicht wärmeleitenden, wärmereflektierenden oder Wärme auf das eingebrachte Laminat zurückkonzentrierenden Material bestehenden Rahmen, dessen Innenmaße den Endmaßen der Karte entsprechen, aufgehalten, gedämmt, zurückgeworfen bzw. auf die Laminatform rückkonzentriert werden.

2. Vorrichtung zur Herstellung von kartenförmigen, Endmaß aufweisenden Informationsträgem (Laminator), insbesondere von Kreditkarten, Ausweiskarten, Identifikationskarten, Zugangskarten etc., wobei in den Hohlraum des Laminators eingebrachte Kartenschichten durch Druck- und Wärmeeinwirkung kaschiert werden, **dadurch gekennzeichnet, daß** die den Hohlraum bildende Kavität (7a) des Laminators (12) einen umlaufenden Rahmen aufweist, der aus einem gering oder gar nicht wärmeleitenden, einem wärmereflektierenden oder Wärme auf das eingebrachte Laminat zurückkonzentrierenden Material besteht und dessen Innenmaße den Endmaßen der Karte entsprechen.

3. Vorrichtung nach Anspruch 2, **dadurch gekennzeichnet, daß** zu beiden Seiten des mit seinen Innenmaßen die Kavität (7a) für den Kaschiervorgang bildenden Rahmens (7) Heizplatten (2, 6) angeordnet sind.

4. Vorrichtung nach Anspruch 2 oder 3, **dadurch gekennzeichnet, daß** eine der Heizplatten (untere Heizplatte 6) mit ihren Außenabmessungen den Innenabmessungen des Rahmens (7) entspricht und in diesen, vorzugsweise mit zugeordneten Kühlkörpern (8) unter Vorspannungswirkung einfahrbar ist zur Erzeugung des für den Kaschiervorgang erforderlichen Drucks.

5. Vorrichtung nach Anspruch 4, **dadurch gekennzeichnet, daß** auf den an die untere Heizplatte (6) angrenzenden Kühlkörper (8) Vorspannungsmittel (9) einwirken.

6. Vorrichtung nach einem der Ansprüche 2 bis 5, **dadurch gekennzeichnet, daß** die obere Heizplatte (2) die von dem Rahmen (7) gebildete Kavität (7a) deckelartig mit über die Rahmenabmessungen vorspringender Randlippe (2a) verschließt.

7. Vorrichtung nach einem der Ansprüche 2 bis 6, **dadurch gekennzeichnet, daß** zwischen der die Kavität (7a) deckelartig verschließenden Heizplatte (2) und dem Rahmen (7) eine eigene Relativbewegung möglich ist mit weiteren, druckerzeugenden Mitteln (10), die Rahmen (7) und überdeckende Heizplatte (2) fest aneinander pressen.

8. Vorrichtung nach einem der Ansprüche 2 bis 7, **dadurch gekennzeichnet, daß** zur Erhöhung des spezifischen Anpressdrucks zwischen Rahmenab-schlußkante und überdeckender Heizplatte (2) der Rahmen (7) im Übergangskantenbereich eine Materialverdünnung aufweist.

9. Vorrichtung nach Anspruch 8, **dadurch gekennzeichnet, daß** die Materialverdünnung von einer umlaufenden äußeren Ringausnehmung (7b) gebildet ist.

10. Vorrichtung nach einem der Ansprüche 2 bis 9, **dadurch gekennzeichnet, daß** der Rahmen (7) mit seiner Übergangs-Randkante durch eigene Vorspannungsmittel (10) gegen die überlappende Heizplattenlippe (2a) gepreßt ist.

11. Vorrichtung nach Anspruch 10, **dadurch gekennzeichnet, daß** die Rahmen-Vorspannungsmittel (10) sich an dem der unteren Heizplatte (2) zugeordneten und diese mit Druck beaufschlagenden Kühlkörper (8) abstützen.

## Claims

1. A method of producing information carriers in the form of cards, in particular credit cards, passes, identification cards, admittance cards etc., wherein the laminating process comprises placing at least one card template which is to be sized, preferably a laminate comprising a plurality of sized card layers, into a hollow mould and subjecting it to a simultaneous action of pressure and heat for a pre-determined time, **characterized in that**, on the one hand, the material introduced into the hollow mould is heated over at least one large area, as known per *se* by the use of heating plates, and, on the other hand, in the peripheral, narrow, outer boundary region of the material introduced quantities of heat flowing off *per se* there are retained, blocked in, reflected and concentrated back onto the laminate template by a peripheral frame consisting of a material which is only slightly heat-conducting, or not heat-conducting at all, reflects heat or concentrates heat back onto the introduced laminate, the internal dimensions of the said frame corresponding to the final dimensions of the card.

2. An apparatus (laminator) for producing sized information carriers in the form of cards, in particular credit cards, passes, identification cards, admittance cards etc., wherein card layers introduced into the hollow space of the laminator are laminated by the action of pressure and heat, **characterized in that** the cavity (7a) - forming the hollow space - of the laminator (12) has a peripheral frame consisting of a material which is only slightly heat-conducting, or not heat-conducting at all, reflects heat or concentrates heat back onto the introduced laminate, the internal dimensions of the said frame corresponding to the final dimensions of the card.

3. An apparatus according to Claim 2, **characterized in that** heating plates (2, 6) are arranged on both sides of the frame (7) which forms, by its internal dimensions, the cavity (7a) for the laminating process.

4. An apparatus according to Claim 2 or 3, **characterized in that** one of the heating plates (the lower heating plate 6) corresponds with its external dimensions to the internal dimensions of the frame (7) and is capable of being inserted with a pre-stressing action into the said frame, preferably together with associated cooling bodies (8) in order to produce the pressure required for the laminating process.

5. An apparatus according to Claim 4, **characterized in that** pre-stressing means (9) act on the cooling body (8) adjacent to the lower heating plate (6).

6. An apparatus according to one of Claims 2 to 5, **characterized in that** the upper heating plate (2) closes the cavity (7a), which is formed by the frame (7), in a lid-like manner by way of a boundary lip (2a) projecting beyond the frame dimensions.

7. An apparatus according to one of Claims 2 to 6, **characterized in that** an intrinsic relative movement is possible between the heating plate (2) - which closes the cavity (7a) in a lid-like manner - and the frame (7) by way of further, pressure-producing means (10) which press the frame (7) and the covering heating plate (2) firmly against each other.

8. An apparatus according to one of Claims 2 to 7, **characterized in that** in order to increase the specific contact pressure between the frame border edge and the covering heating plate (2), the frame (7) has a reduction in material in the transitional edge region.

9. An apparatus according to Claim 8, **characterized in that** the reduction in material is formed by a peripheral, outer annular recess (7b).

10. An apparatus according to one of Claims 2 to 9, **characterized in that** the frame (7) is pressed by its transitional boundary edge against the overlapping heating-plate lip (2a) by separate pre-stressing means (10).

11. An apparatus according to Claim 10, **characterized in that** the pre-stressing means (10) of the frame are supported on the cooling body (8) which is associated with the lower heating plate (2) and acts upon the latter with pressure.

## Revendications

1. Procédé de production de supports d'information en forme de carte, en particulier de cartes de crédit, cartes d'identité, cartes d'identification, cartes d'accès, etc., selon lequel, pour l'opération de doublage, au moins une ébauche de carte qu'il s'agit de mettre aux cotes définitives, de préférence un stratifié composé de plusieurs couches de carte présentant la cote définitive, est introduit dans un moule creux et soumis pendant un temps prédéterminé à une action simultanée de pression et de chaleur,
**caractérisé en ce que**
d'une part le chauffage de la matière introduite dans le moule creux s'effectue sur au moins une grande surface, comme cela est connu en soi par l'utilisation de plaques chauffantes et, d'autre part, dans l'étroite région marginale périphérique de la matière introduite, des quantités de chaleur qui s'échappent à cet endroit sont retenues, isolées, renvoyées ou re-concentrées sur l'ébauche stratifiée par un cadre périphérique composé d'une matière peu ou absolument pas conductrice de la chaleur, et dont les cotes intérieures correspondent aux cotes définitives de la carte.

2. Dispositif de production de supports d'information en forme de carte qui présentent une cote définitive (une machine à doubler), en particulier des cartes de crédit, cartes d'identité, cartes d'identification, cartes d'accès, etc., dans lequel des couches de carte placées dans la cavité de la machine à doubler sont doublées par l'action d'une pression et de la chaleur,
**caractérisé en ce que**
la cavité (7a) de la machine à doubler (12) qui forme l'empreinte présente un cadre périphérique fait d'une matière peu ou absolument pas conductrice de la chaleur, qui réfléchit la chaleur ou re-concentre la chaleur sur le stratifié introduit et dont les cotes intérieures correspondent aux cotes définitives de la carte.

3. Dispositif selon la revendication 2,
**caractérisé en ce que**
des plaques chauffantes (2, 6) sont disposées des deux côtés du cadre (7) qui forme par ses cotes intérieures la cavité (7a) pour l'opération de doublage.

4. Dispositif selon la revendication 2 ou 3,
**caractérisé en ce qu'**
une des plaques chauffantes (plaque chauffante intérieure (6)) correspond par ses dimensions extérieures aux dimensions intérieures du cadre (7) et peut être introduite dans ce dernier, de préférence avec des corps de refroidissement (8) associés, sous une action de précontrainte, pour la production de la pression nécessaire pour l'opération de doublage.

5. Dispositif selon la revendication 4,
**caractérisé en ce que**
des moyens de précontrainte (9) agissent sur le corps refroidisseur (8) adjacent à la plaque chauffante inférieure (6).

6. Dispositif selon une des revendications 2 à 5,
**caractérisé en ce que**
la plaque chauffante supérieure (2) ferme la cavité (7a) formée par le cadre (7) à la façon d'un couvercle, avec une lèvre marginale (2a) qui déborde au-delà des dimensions du cadre.

7. Dispositif selon une des revendications 2 à 6,
**caractérisé en ce qu'**
il peut se produire entre la plaque chauffante (2) qui ferme la cavité (7a) à la façon d'un couvercle et le cadre (7), un mouvement relatif propre, avec d'autres moyens (10) générateurs de pression qui pressent fermement l'un contre l'autre le cadre (7) et la plaque chauffante (2) qui la recouvre.

8. Dispositif selon une des revendications 2 à 7,
**caractérisé en ce que**
pour renforcer la pression de compression spécifique entre le bord terminal du cadre et la plaque chauffante (2) qui le recouvre, le cadre (7) présente un amincissement de matière dans la région du bord de transition.

9. Dispositif selon la revendication 8,
**caractérisé en ce que**
l'amincissement de matière est formée par un évidement annulaire extérieur périphérique (7b).

10. Dispositif selon une des revendications 2 à 9,
**caractérisé en ce que**
le cadre (7) est pressé par son bord marginal de transition contre la lèvre (2a) de la plaque chauffante qui le recouvre par des moyens de précontrainte propre (10).

11. °) Dispositif selon la revendication 10,
**caractérisé en ce que**
les moyens de précontrainte (10) du cadre prennent appui sur le corps de refroidissement (8) associé à la plaque chauffante inférieure (2) et qui sollicite cette plaque avec une pression.
